(19) Europäisches Patentamt

European Patent Office

Office européen des brevets

(11) **EP 0 680 245 B1**

(12) **FASCICULE DE BREVET EUROPEEN**

(45) Date de publication et mention
de la délivrance du brevet:
**30.08.2000 Bulletin 2000/35**

(51) Int. Cl.⁷: **H05B 41/295**, H05B 41/16,
H02M 3/335

(21) Numéro de dépôt: **95105100.2**

(22) Date de dépôt: **05.04.1995**

(54) **Ensemble comprenant un convertisseur statique à interrupteur commandé et un circuit de commande**

Statischer Wandler mit gesteuertem Schalter und Steuerungsschaltung

Static converter with controlled switch and operating circuit

(84) Etats contractants désignés:
**AT BE CH DE DK ES FR GB GR IE IT LI LU MC NL PT SE**

(30) Priorité: **29.04.1994 CH 134094**
**03.06.1994 CH 174794**
**20.06.1994 CH 194594**
**17.11.1994 CH 345894**

(43) Date de publication de la demande:
**02.11.1995 Bulletin 1995/44**

(73) Titulaire: **Bonnet, André**
**F-13360 Roquevaire (FR)**

(72) Inventeur: **Bonnet, André**
**F-13360 Roquevaire (FR)**

(74) Mandataire:
**Hranitzky, Wilhelm Max et al**
**c/o WILLIAM BLANC & CIE**
**Conseils en Propriété Industrielle SA**
**6, rue de la Grotte**
**1003 Lausanne (CH)**

(56) Documents cités:
**EP-A- 0 445 501**       **FR-A- 2 702 103**
**GB-A- 2 168 554**       **US-A- 4 010 535**
**US-A- 4 888 673**       **US-A- 5 132 890**

**Description**

La présente invention a pour objet un ensemble comprenant un convertisseur statique à interrupteur commandé de type "Fly-back" associé à un redresseur survolteur et un circuit de commande.

Une application particulièrement visée par la présente invention de ce convertisseur est l'alimentation d'une lampe à décharge. Un but de la présente invention est d'apporter des améliorations à la structure de base d'un tel convertisseur statique, plus particulièrement au niveau de la commande de son interrupteur, du circuit redresseur au secondaire et de la réalisation du ou des transformateurs de manière à obtenir un fonctionnement à puissance constante.

Un autre but de la présente invention est de proposer différentes structures de convertisseurs DC/DC ou DC/AC, organisés autour des mêmes ensembles, pour alimenter une lampe à décharge.

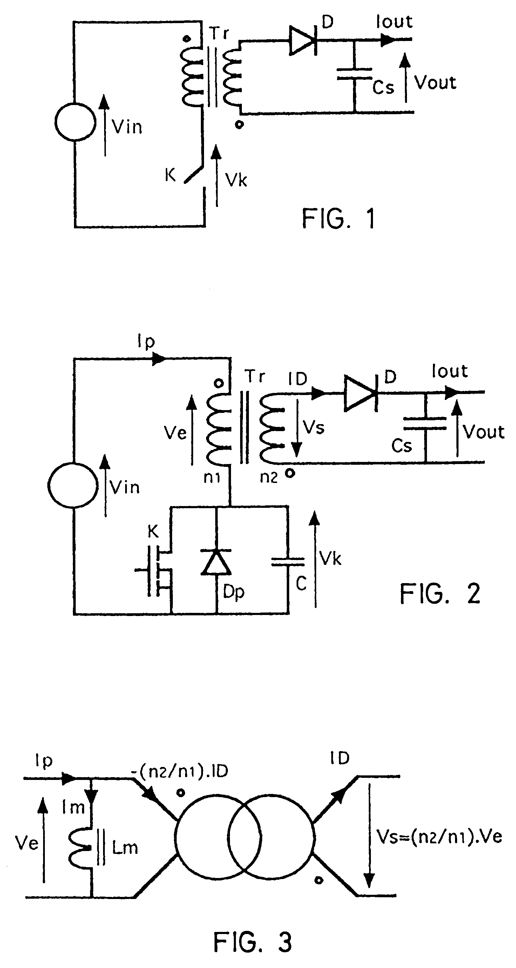

La structure de base, connue, d'un convertisseur monointerrupteur de type "Fly-back" est illustrée schématiquement à la figure 1. Si on souhaite faire travailler l'interrupteur en "commutations douces" (interrupteur pseudorésonnant), on lui adjoint un condensateur C en parallèle et une diode Dp en parallèle inverse qui peut être la diode interne du composant interrupteur (transistor MOS par exemple).

Le but de la présente demande de brevet est d'apporter des améliorations à la structure du convertisseur illustré à la figure 2 plus particulièrement lorsque celui-ci est utilisé pour l'alimentation de lampe à décharge.

Les dessins annexés illustrent schématiquement et à titre d'exemple plusieurs formes d'exécution du convertisseur statique selon l'invention, des formes d'exécution d'un circuit de commande de l'interrupteur K du convertisseur et des structures DC/AC, avec des exemples de schémas de commande, destinées en particulier à l'alimentation de lampes à décharge.

La figure 3 est un circuit équivalent d'un transformateur amélioré selon l'invention.

La figure 4 illustre les formes d'ondes et le plan de phase du fonctionnement normal du convertisseur statique en démagnétisation complète.

La figure 5 illustre les formes d'ondes du convertisseur fonctionnant en démagnétisation incomplète.

La figure 6 illustre les formes d'ondes du convertisseur statique en fonctionnement à vide.

La figure 7 illustre un convertisseur statique DC/DC comprenant au secondaire un circuit auxiliaire redresseur élevateur de tension.

La figure 8 illustre la forme des tensions à la sortie du transformateur et aux points A et B du schéma de la figure 7.

La figure 9 illustre la caractéristique de sortie du convertisseur illustré à la figure 7.

Les figures 10 et 10bis illustrent des convertisseurs statiques présentant d'autres circuits auxiliaires au secondaire.

La figure 11 illustre schématiquement un exemple de réalisation d'un circuit de commande selon l'invention de l'interrupteur K.

La figure 12 illustre la forme d'onde de la tension alternative d'alimentation d'un récepteur du type lampe à décharge.

La figure 13 illustre un convertisseur statique DC/AC associant deux structures Fly-Back.

La figure 14 illustre une structure DC/AC pour l'alimentation d'une lampe à décharge.

La figure 15 illustre une structure intégrant un amorceur dans un convertisseur DC/AC.

La figure 16 montre comment commander ce convertisseur pour obtenir une séquence d'amorçage suivie d'un régime établi.

La figure 17 constitue un exemple de réalisation du circuit de commande du convertisseur pour lampe à décharge de la figure 15.

La figure 18 illustre un convertisseur de type "Fly-back" qui élabore des tensions alternatives dont la forme d'onde est schématisée à la figure 12.

La figure 19 illustre le profil du circuit magnétique du transformateur utilisé dans le convertisseur de la figure 18 et la disposition des bobinages par rapport au circuit magnétique.

La figure 20 illustre une structure pour l'alimentation d'une lampe à décharge comportant un circuit d'amorçage intégré au convertisseur.

La figure 21 illustre un exemple d'un circuit de commande du convertisseur illustré à la figure 20.

La figure 22 illustre une autre structure de convertisseur DC/AC sans diode de redressement au secondaire.

La figure 23 illustre la structure de la figure 22 adaptée à l'alimentation d'une lampe à décharge.

La figure 24 constitue un exemple de réalisation du circuit de commande du convertisseur pour lampe à décharge
de la figure 23.

La figure 25 illustre une variante du convertisseur de la figure 23 utilisant un interrupteur spécifique pour l'amorceur.

Une première amélioration apportée par la présente invention au convertisseur statique selon l'invention réside dans la réalisation du transformateur pour qu'il présente une inductance de fuite négligeable.

Ceci est obtenu en gravant les bobinages des enroulements directement sur le circuit imprimé qui sert de support au convertisseur et en insérant le noyau magnétique et sa culasse autour de celui-ci. En réalisant le transformateur de cette façon on rend l'influence de l'inductance de fuite négligeable pour le fonctionnement du convertisseur et on peut utiliser un schéma équivalent du transformateur tel qu'illustré à la figure 3.

En utilisant alors un tel transformateur amélioré pour le convertisseur de la figure 2 on aura, pour les différents modes de fonctionnement les phases successives suivantes :

I - fonctionnement normal en démagnétisation complète

De t0 à t1 :      K est fermé. Il y a croissance linéaire du courant primaire "Ip". La diode D est bloquée
- At = t1 , K coupe le courant "$I_p$max".

De t1 à t2 :      C'est une phase résonnante entre Vin, Lm et C - At = t2  ,   Vs = -Vout (tension de sortie) D conduit.

De t2 à t3 :      Vk = Vin + (n1/n2).Vout et Ip = 0 . im décroît linéairement et
- At = t3 , ID = 0, D se bloque.

De t3 à t4 :      Il y a une phase résonnante au cours de laquelle : im = ip .
- At = t4 , Ve = 0 et Vk = Vin .

De t4 à t5 :      phase résonnante.
- At = t5 , D conduit si la condition : (n1/n2).Vout > Vin est remplie.

De t5 à t6 :      Le circuit qui contrôle l'interrupteur doit détecter le front descendant de la tension Vk et élaborer un ordre de commande pour fermer cet interrupteur entre t5 et t6 .
Le convertisseur ainsi bouclé est auto-oscillant.

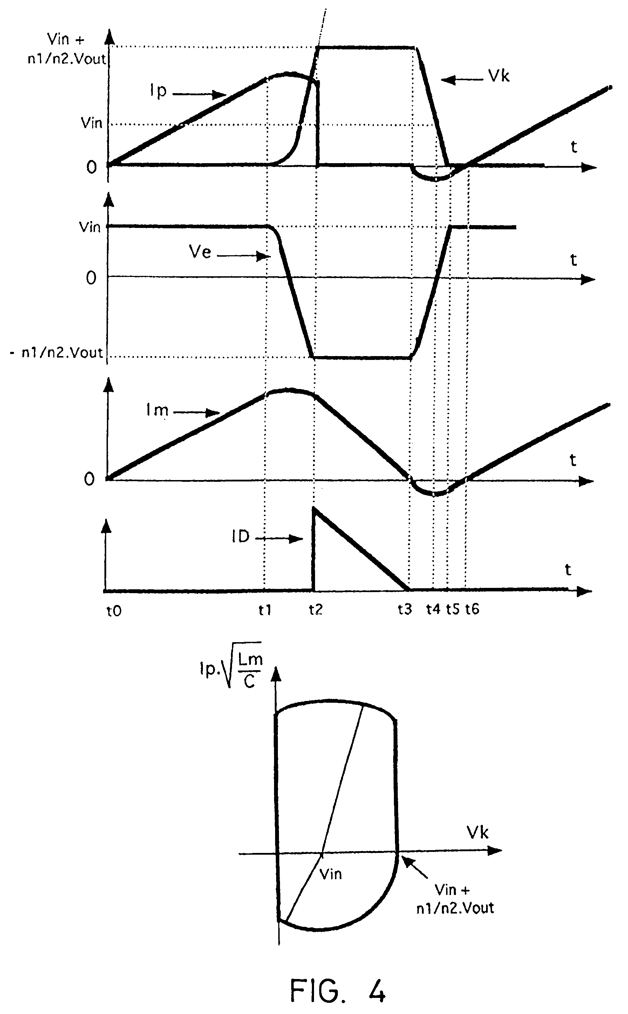

Les formes d'ondes et le plan de phase associé sont représentés sur la figure 4. La tension aux bornes de l'interrupteur K vaut, à l'état bloqué, Vin +(n1/n2).Vout . C'est donc, à Vin près, l'image de la tension de sortie Vout. Ainsi, contrôler la tension de crête aux bornes de l'interrupteur K revient à contrôler la tension de sortie.

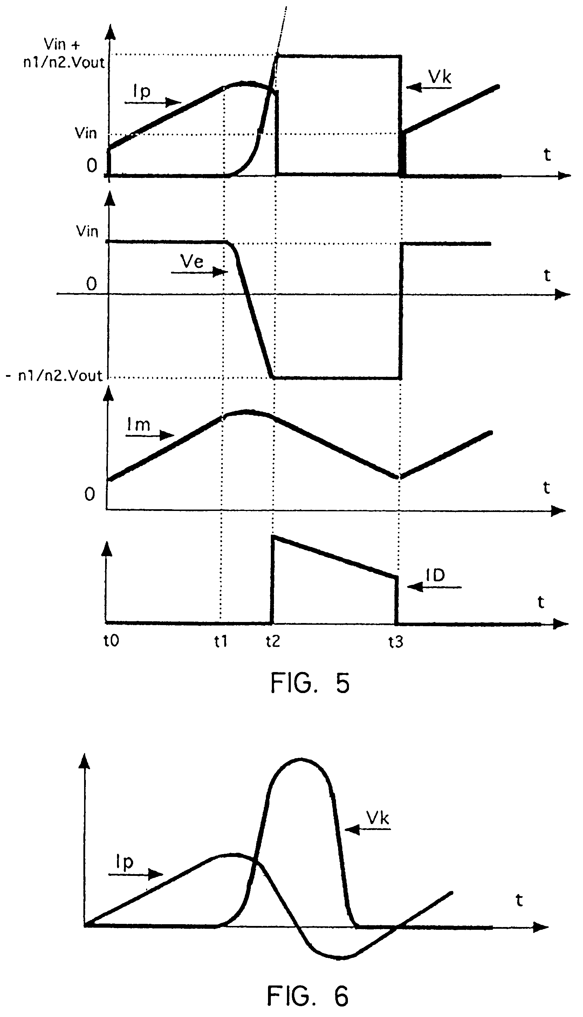

II - Fonctionnement en démagnétisation incomplète (illustré par la figure 5)

Pour augmenter la puissance de sortie, il faut augmenter le courant "Ipmax" coupé par l'interrupteur.

Si le circuit de commande de l'interrupteur impose une durée maximale fixe de démagnétisation, il existe une valeur de Ipmax à partir de laquelle le courant iD dans la diode D n'a pas le temps de revenir à zéro. La démagnéti-sation est incomplète Alors la commutation à la fermeture (instant t0) est forcée alors que la commutation à l'ouverture (instant t1) reste résonnante. Les pertes en commutation sont plus élevées mais restent tolérables car le régime de surpuissance est transitoire et court. Il y a continuité du fonctionnement du convertisseur entre la démagnétisation complète et la démagnétisation incomplète.

La durée "t2 - t1" étant courte et quasiment constante quel que soit le régime de fonctionnement, il est plus commode d'élaborer par le circuit de commande une durée "t3 - t1" fixe à partir de l'instant t1 d'ouverture de l'interrupteur.

La durée de conduction "t1 - t0" est liée à la tension appliquée à l'entrée "Vin" et à la puissance extraite en sortie.

Ici aussi, contrôler la tension crête aux bornes de l'interrupteur K revient à contrôler la tension de sortie.

III - fonctionnement à vide

A vide, le circuit ne se comporte plus comme un convertisseur "fly-back". Le courant iD est nul et il y a résonnance entre le condensateur C et l'inductance magnétisante Lm (figure 6). Le front descendant de la tension Vk servant à élaborer l'ordre de commande à la fermeture de l'interrupteur. Le convertisseur est auto-oscillant et le contrôle de la tension crête permet au convertisseur de fonctionner à vide sans surdimensionner l'interrupteur en tension.

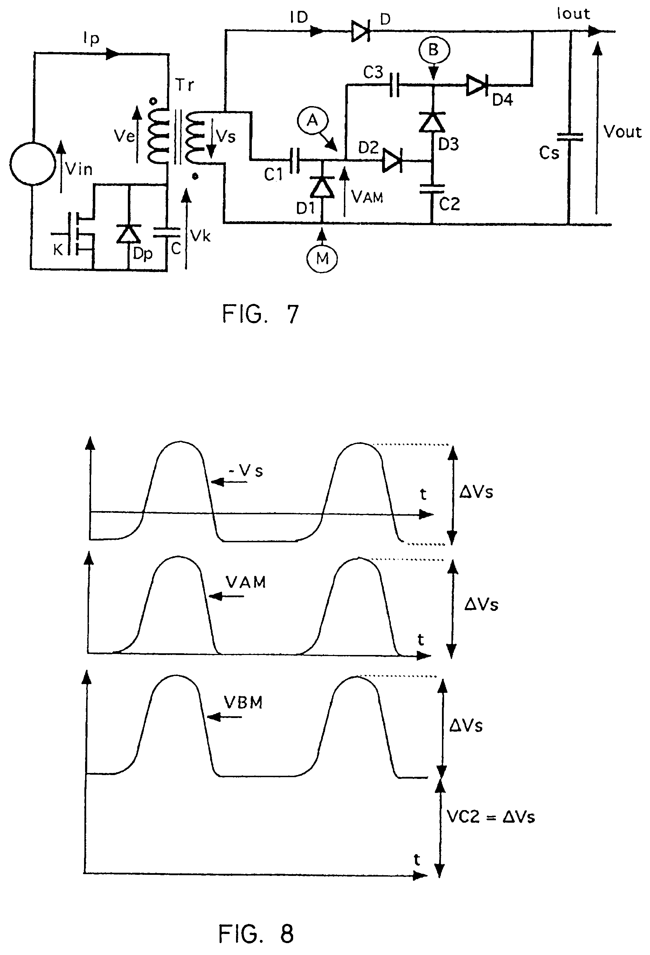

Quand le convertisseur est à vide, on peut en contrôlant la tension de crête aux bornes de l'interrupteur, obtenir une tension de sortie élevée sans perturber les autres modes de fonctionnement. Il suffit pour cela d'ajouter au secondaire du transformateur le circuit formé des éléments C1, C2, C3, D1, D2, D3, D4 représentés à la figure 7.

Si ce circuit auxiliaire n'est pas branché, le condensateur de sortie CS se charge à une tension maximale Voutm qui est fixée par :

- la tension d'entrée "Vin",
- la tension de crête (contrôlée)"Vkcrête" que l'on accepte aux bornes de l'interrupteur
- le rapport de transformation m = n2/n1 du transformateur.

On a : Voutm = m(Vkcrête - Vin) .

Tant que le convertisseur est générateur de courant, cette valeur ne peut pas être dépassée. Quand l'impédance de sortie tend vers l'infini, le courant de sortie tend vers zéro et le circuit annexe peut agir. A chaque période, circule une quantité l'électricité Q à travers le condensateur C1 qui vaut Q = C1. ▲VC1 , expression dans laquelle ▲VC1 représente la variation de tension aux bornes de C1. Cette charge, apportée à la sortie quand le courant y est nul s'accumule dans le condensateur CS dont la tension peut monter au-dessus de la valeur Voutm, ce qui bloque la diode D.

Pour connaître la valeur maximale de Vout accessible grâce au circuit annexe, on imagine un état d'équilibre avec Vout > Voutm. Les condensateurs C1, C2, C3 sont chargés à des tensions pratiquement constantes. L'ondulation crête à crête ▲Vs de la tension Vs se retrouve en A mais uniquement positive (présence de la diode D1). Le condensateur C2 est chargé par D2 à la tension constante VC2 égale à ▲VS. On retrouve au point B l'ondulation crête à crête du point A qui s'ajoute à la tension VC2. D4 charge le condensateur Cs à la tension crête du point B, soit : 2.▲VS.

Etant donné que, à vide, ▲Vs = m.Vkcrête , la tension à vide en sortie peut atteindre : 2.m.Vkcrête. Les tensions -Vs, VAM, VBM sont représentées à la figure 8.

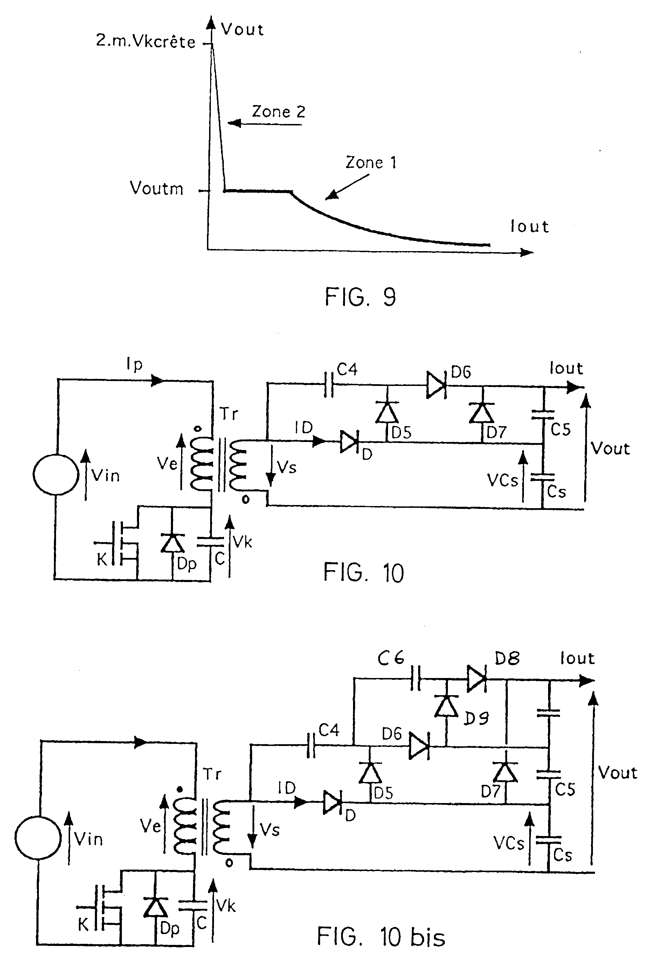

La caractéristique de sortie du convertisseur de la figure 7 est représentée à la figure 9. Elle se décompose en deux parties : la zone 1 correspondant à la caractéristique du convertisseur sans le circuit élévateur de tension auxiliaire et la zone 2 correspondant à l'apport du circuit auxiliaire. En résumé, le condensateur CS peut se charger jusqu'à la tension Voutm par l'intermédiaire de la diode D. Puis, quand le courant de sortie Iout tend vers zéro, la quantité d'électricité apportée par le circuit auxiliaire , à chaque période, via la diode D4 devient supérieure à celle qui est nécessaire en sortie. La diode D est bloquée. La tension Vout peut augmenter jusqu'à 2.m.Vkcrête.

Tous les composants du circuit auxiliaire sont soumis à une tension maximale à leurs bornes égale à m.Vkcrête. Avec une structure classique, ce point de fonctionnement ne pourrait être atteint qu'avec des contraintes en tension sur les composants de puissance sensiblement supérieures.

On arrive à un résultat semblable avec la structure représentée à la figure 10. En fonctionnement normal, les charges apportées en sortie par C4 via D6 sont insuffisantes pour qu'il y ait stockage dans C5. Quand l'impédance de sortie tend vers l'infini, alors que la tension aux bornes de CS atteint : VCSm = m(Vkcrête - Vin) , la quantité d'électricité apportée en sortie à chaque période par C4 permet de charger C5. La diode D continue à maintenir VCSm = m(Vkcrête - Vin) et le condensateur C5 peut se charger à une tension égale à ▲VS. On trouve en sortie : Vout=m(Vkcrête - Vin) + ▲VS , soit : 2.m.Vkcrête - m.Vin .

Dans cette disposition la diode D7 en parallèle sur D5 et D6 n'est pas indispensable mais elle permet d'améliorer le rendement puisqu'un seuil de diode est supprimé.

Toutes choses égales par ailleurs, la tension maximale accessible ici est inférieure à celle obtenue avec le dispositif de la figure 7. On peut arriver à la même tension maximale en cumulant en cascade deux circuits auxiliaires comme le montre le schéma de la figure 10bis. La diode D7 ponte alors 4 diodes pour améliorer le rendement.

Ainsi en utilisant des circuits auxiliaires au secondaires du convertisseur tels qu'illustrés aux figures 7, 10 et 10bis, on améliore encore la caractéristique de sortie du convertisseur. Cette caractéristique de sortie ainsi que le fonctionnement du convertisseur ont ainsi pu être améliorés par la combinaison d'une réalisation très particulière du transformateur qui rend l'inductance de fuite de celui-ci négligeable et par l'adjonction d'un circuit auxiliaire ou secondaire, circuit du type redresseur-élévateur de tension.

Cette combinaison de moyens est originale car rien ne laisse à penser que des moyens en apparence totalement indépendants l'un de l'autre coopèrent à un but commun.

Comme on le verra dans ce qui suit on peut encore améliorer les performances du convertisseur statique, notamment dans son utilisation pour l'alimentation de lampe à décharge en combinant avec les deux moyens précités, bobinages spéciaux du transformateur et circuit auxiliaire redresseur-élévateur de tension au secondaire, un troisième moyen indépendant, la commande forcée de l'interrupteur K.

La présente invention a donc encore pour objet un ensemble convertisseur statique à mono-interrupteur et le circuit de commande de ce dernier.

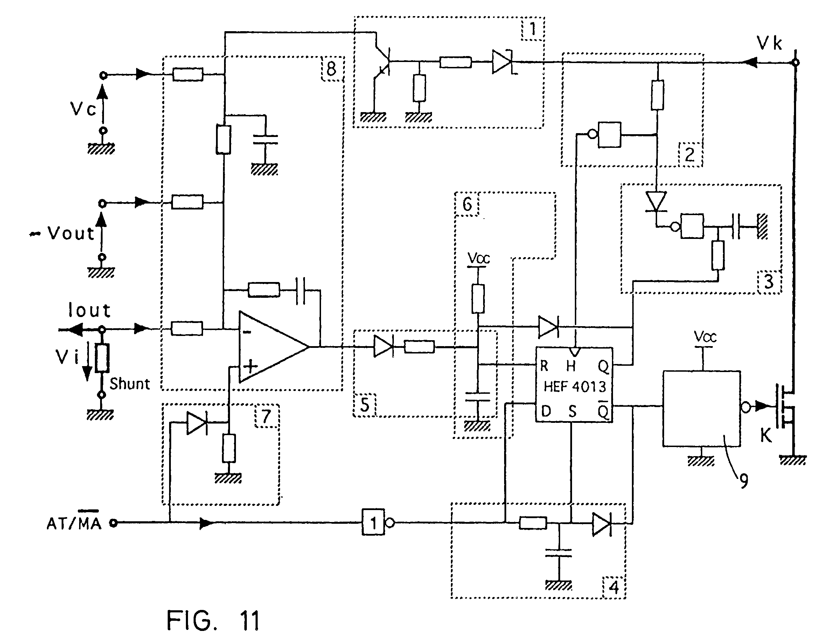

Le schéma représenté à la figure 11 constitue un exemple de réalisation de circuit de commande selon l'invention. Les ordres de commande de l'interrupteur de la structure représentée aux figures 7, 10 et 10bis, sont élaborés à partir des fonctions décrites ci- dessous à l'aide des circuits suivants :

1. Contrôle de la tension de crête aux bornes de l'interrupteur.
Il y a une boucle de limitation de la tension de crête qui est prioritaire. Ce circuit a pour objectif d'interdire à la tension de crête appliquée aux bornes de l'interrupteur de dépasser une valeur fixée quel que soit le régime de fonctionnement.

2. Synchronisation sur le front descendant de la tension aux bornes de l'interrupteur.
Le front descendant de la tension Vk aux bornes de l'interrupteur est détecté pour relancer la fermeture de K en synchronisme avec cet événement. Cette fonction est effectivement prise en compte en régime de fonctionnement normal (démagnétisation complète) et à vide.

3. Circuit d'inhibition.
Pour éviter d'activer la détection du front descendant de la tension Vk par une sur-oscillation parasite, on inhibe le circuit de synchronisation pendant un temps pré-défini après l'ordre de commutation à l'ouverture. Cette fonction garantit une grande stabilité de fonctionnement à tous les régimes.

4. Elaboration d'un temps de non conduction fixe.
En régime de démagnétisation incomplète, l'ordre de commutation à la fermeture arrive avant l'ordre de synchronisation issu du front descendant de Vk. Il a été élaboré par un circuit qui fixe le temps maximum de non conduction (t3 - t1) de l'interrupteur. Au-delà d'une valeur choisie du courant Ipmax coupé par l'interrupteur, le temps de non conduction est fixe. Il s'identifie avec le temps de la démagnétisation (qui est alors incomplète).

**5. Réglage de la durée de conduction "Ton"**

La durée de conduction (t1 - t0) est déterminée par le résultat de la (ou des) boucle(s) de régulation (tension de sortie, courant de sortie, puissance, ...) et de la limitation de la tension de crête.

**6. Limitation du temps de conduction "Ton" à une valeur maximale pré-définie.**

En limitant le temps de conduction, la puissance de sortie est limitée en dessous d'une valeur minimale de la tension d'entrée afin de protéger le convertisseur.

**7. Circuit d'initialisation.**

Pour assurer un démarrage en douceur (soft-start) le circuit d'initialisation fixe la sortie de l'intégrateur de la boucle d'asservissement à un potentiel qui va générer un temps de conduction faible. Ce temps croît ensuite progressivement.

**8. Boucle d'asservissement.**

Le convertisseur destiné à entrer dans un système d'alimentation de lampe à décharge doit se comporter en générateur de tension à vide (contrôle de la haute tension destinée à l'amorçage), puis en générateur de courant immédiatement après l'amorçage, et enfin en générateur à puissance contrôlée en régime de fonctionnement permanent et en surcharge.

Pour ce faire, on peut comme cela est connu, asservir le courant de sortie "Iout". Mais cette technique pose un problème pour réguler la tension de sortie Vout à vide car le passage du fonctionnement à vide à celui de surpuissance ne peut se faire qu'avec une variation de la tension de consigne très rapide. D'autre part, à vide, on ne peut contrôler la tension de sortie sans boucle d'asservissement de tension.

Pour éviter cet inconvénient, un nouveau type d'asservissement a été développé dans la présente invention. Ici on asservit la somme de la tension image du courant de sortie "Iout" respectivement du courant d'entrée Iin et de l'image de la tension de sortie "Vout" respectivement de la tension d'entrée Vin.

Le principe s'explique par un raisonnement mathématique :

Soient deux grandeurs A et B initialement identiques ( A = B = Ao ) mais qui varient au cours du temps de façon à ce que leur somme A + B reste constante. On peut écrire :

$$A = Ao + x \text{ et } B = Ao - x$$

Le produit P vaut initialement : $Po = Ao^2$, et à un instant quelconque $P = A.B = Ao^2 - x^2$.

et la quantité : $(p - Po)/Po = \blacktriangle P/po = - x^2/Ao^2$

On constate que ▲P/Po est << ▲A/Ao tant que x est petit.

Par exemple : si Ao = 10 et x = 2, soit ▲A/A = - ▲B/B = 20% , alors ▲P/Po = 4% .

Si A est une tension image de la tension de sortie, on a : A = k.Vout .

Si B est une tension image du courant de sortie, on a B = k'.Iout .

Alors si on accorde un poids égal à l'image de la tension de sortie et à l'image du courant de sortie, <u>en asservissant la somme</u> de ces deux grandeurs autour d'un point nominal correctement choisi, on fabrique un convertisseur qui est asservi en puissance, à quelques pour cent près.

De plus, quand le courant de sortie est nul, (fonctionnement à vide), seule l'image de la tension de sortie intervient et le convertisseur est asservi en tension.

Enfin, quand on est en régime de surpuissance, à faible tension de sortie, c'est l'image de la tension de sortie qui est négligeable et le convertisseur fonctionne en asservissement de courant. L'exemple de la figure 11 montre que le circuit d'asservissement est très simple et que l'ensemble des modes de fonctionnement du convertisseur est contrôlé par une seule grandeur : la tension de consigne ou de commande Vc. On peut alors trouver les facteurs d'échelle k et k' tels que, lorsque la tension de consigne est maximale, à vide la tension de sortie est régulée à la valeur "Vout" maximale, et en court-circuit le courant est régulé à la valeur "Iout" maximale.

Ainsi, la tension de commande Vc permet de gérer l'évolution du comportement d'un récepteur R tel qu'une lampe à décharge LD depuis l'instant d'amorçage jusqu'à l'obtention d'un régime permanent de fonctionnement stable. Au cours du temps, la boucle de régulation pourra compenser les effets liés au vieillissement de la lampe ou à des paramètres de son environnement tels que la température ambiante.

**9. Circuit driver, amplificateur de courant pour une com mande rapide de l'interrupteur à transistor.**

Dans des variantes on peut pour obtenir un transformateur à inductance de fuite négligeable, utiliser des transformateurs du type "planar" ou des transformateurs dans lesquels les enroulements sont obtenus par découpage chimique ou mécanique.

Pour alimenter des récepteurs avec une tension alternative, il est connu d'associer un convertisseur DC/DC, qui peut être celui qui est décrit ici selon l'invention, avec un onduleur de tension à quatre interrupteurs de puissance. Un autre objet de la présente invention est de proposer des structures originales de convertisseurs DC/AC construites en combinant les moyens déjà cités : disposition des bobinages, circuit secondaire redresseur-élévateur, commande originale d'une structure de type "Fly-Back".

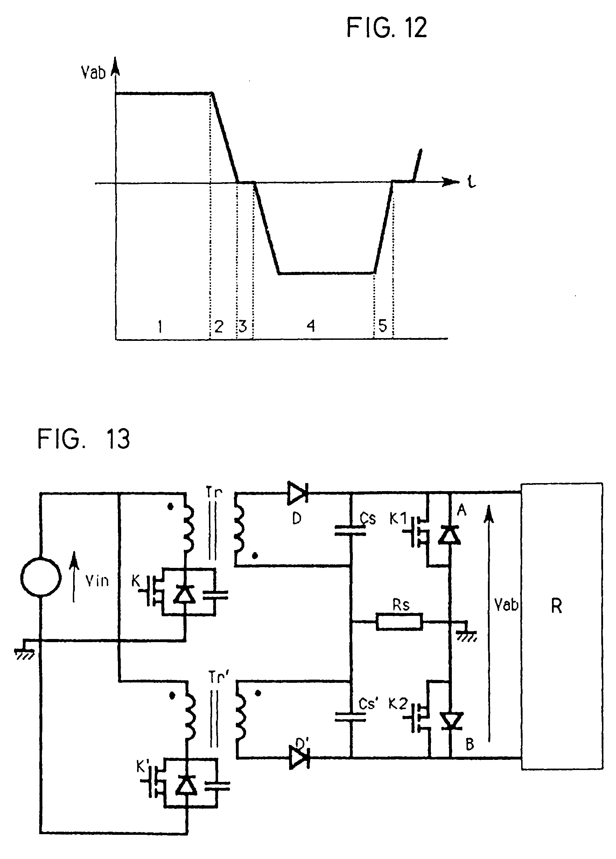

On peut produire une tension alternative semblable à celle qui est illustrée à la figure 12 avec la structure de convertisseur DC/AC illustrée à la figure 13 qui associe deux structures de type "Fly-Back" améliorées selon l'invention.

Le fonctionnement selon les séquences repérées sur la figure 12 est le suivant :

- Pendant la phase 1, les interrupteurs K'et K1 sont ouverts. Le convertisseur formé de K, Tr, D, Cs fonctionnent selon le principe décrit sur la base des figures 2, 3, 4, 5. Le courant traversant le récepteur R circule dans K2 qui est conducteur et dans Rs (résistance servant à la mesure du courant de sortie). C'est l'alternance positive.
- Pendant la phase 2, les interrupteurs K, K' et K1 sont ouverts. Il n'y a plus de transfert d'énergie de la source Vin vers la sortie. Le condensateur Cs se décharge dans le récepteur via Rs et K2.
- Pendant la phase 3, le condensateur Cs est déchargé. La diode D, la diode interne de K1 et K2 sont conducteurs. Vab = 0.
- Pendant la phase 4, les interrupteurs K et K2 sont ouverts. Le convertisseur formé de K', Tr', D', Cs' fonctionne selon le principe décrit sur la base des figures 2,3,4,5. Le courant circule dans le récepteur, dans K1 (passant) et dans Rs. Le courant dans la charge s'est inversé par rapport à la phase 1. C'est l'alternance négative.
- Phase 5, les interrupteurs K, K' et K2 sont ouverts. K1 est fermé. Le condensateur C's se décharge. etc...

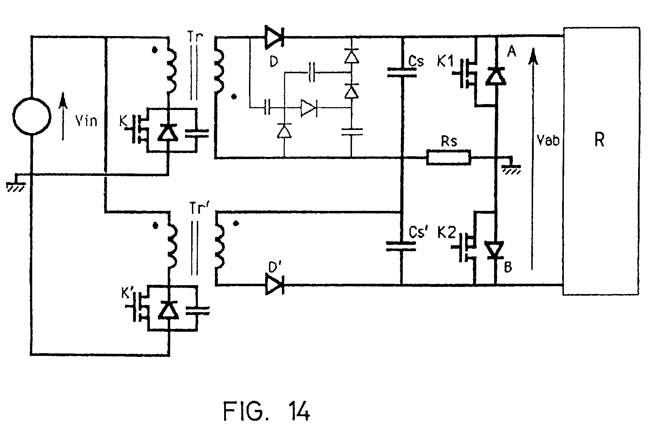

Dans le cas d'une alimentation d'une lampe à décharge, l'amorçage exige une forte tension. Il faut donc pour construire la première alternance du signal Vab, insérer dans le montage un circuit redresseur élévateur de tension sur le principe de la figure 7. La figure 14 montre la structure proposée pour alimenter un récepteur R formé par une lampe à décharge LD.

De plus, l'alimentation de certaines lampes à décharge exige une séquence d'amorçage particulière. Une tension de 10 kV à 30 kV appliquée sur la lampe fait naître un arc électrique. Dès la première microseconde cette tension s'affaiblit à moins de 2 kV. Dix microsecondes après, elle est inférieure à 400V. Enfin, elle se stabilise au bout d'environ 100 milisecondes entre 50V et 110V. C'est alors qu'une inversion des polarités périodiques de fréquence 100 Hz à 500 Hz évite une dégradation très rapide de la lampe.

Une telle alimentation doit donc associer un convertisseur DC/AC à un dispositif amorceur.

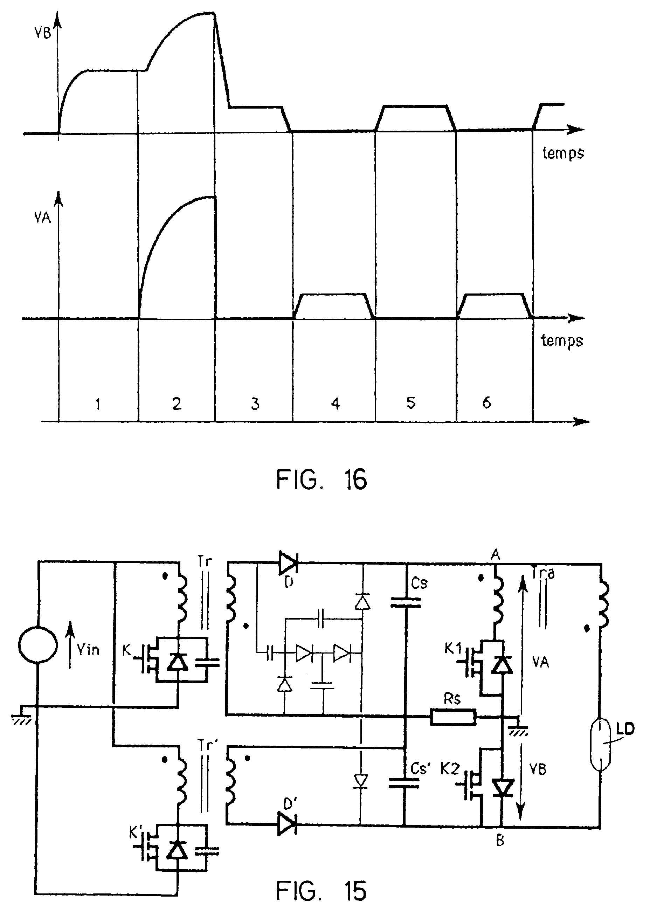

Dans le schéma de convertisseur pour lampe à décharge illustré à la figure 15, on a réalisé une structure originale qui intègre l'amorceur dans le convertisseur DC/AC. Les interrupteurs y sont commandés de façon à produire une séquence d'amorçage suivie d'un régime établi comme illustré à la figure 16.

Dans la phase 1, K1 est ferme, K et K2 sont ouverts. Le convertisseur K', Tr', D', CS' opère en Flyback à vide si la lampe LD est au repos. Alors la tension Vb prend une valeur entre 150 V et 200 V. L'électronique de commande identifie par cette valeur élevée de la tension Vb qu'il faut effectuer une séquence d'amorçage, c'est l'objet de la phase suivante.

Dans la phase 2, K', K1, K2 sont ouverts. Le convertisseur K, Tr, D, CS de type Flyback associé à un montage survolteur élaboré sur le principe exprimé à la figure 7, est validé. Le courant consommé par la charge étant nul, les tensions Va et Vb s'établissent à environ 400 V.

Dans la phase 3, K et K2 sont ouverts. Le Flyback K', Tr', D', CS' est actif. La fermeture de K1 détermine une tension de 10 kV à 30 kV sur la lampe grâce au transformateur élévateur Tra de rapport de transformation de l'ordre de 75. L'arc électrique s'établit. La tension aux bornes de la lampe s'effondre puis se stabilise entre 50V et 110V. L'amorçage est terminé, il suffit d'inverser périodiquement les polarités comme indiqué dans les phases 4, 5, 6 et... de la figure 16.

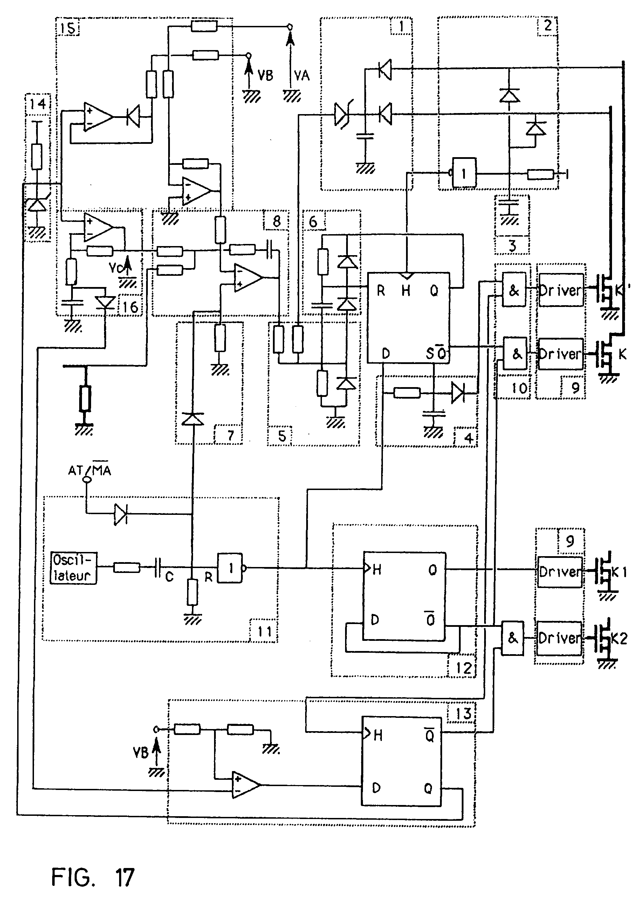

Le pilotage des interrupteurs du convertisseur de la figure 15 est élaboré à l'aide du circuit de commande illustré à la figure 17 dont les circuits et leurs fonctions sont énumérés ci-après :

1. Circuit de contrôle de la tension de crête aux bornes des interrupteurs K ou K'.

2. Circuit de synchronisation sur le front descendant de la tension aux bornes des interrupteurs K et K'.

3. Circuit d'inhibition. Il évite la synchronisation sur des oscillations parasites qui se produisent à l'ouverture des interrupteurs K ou K'.

4. Circuit d'élaboration d'un temps de non conduction fixe.

5. Circuit de réglage de la durée de conduction "Ton".

6. Circuit de limitation du temps de conduction "Ton" à une valeur prédéfinie.

7. Circuit d'initialisation. Au démarrage du convertisseur comme en début de chaque alternance de la tension Vab, il est indispensable d'initialiser l'intégrateur de la boucle d'asservissement à un potentiel qui génère un temps de conduction faible de l'interrupteur K ou K'.

8. Boucle d'asservissement. La position de la résistance Rs dans le convertisseur de la figure 15 permet d'élaborer une image unidirectionnelle du courant dans la charge et la somme des tensions Va et Vb est égale à la valeur absolue de Vab. On dispose ainsi des informations pour réaliser une boucle d'asservissement identique à celle qui est décrite en référence à la figure 11.

9. Circuits drivers de commande rapide des transistors K,K',K1 et K2.

Ces circuits 1 à 9 sont semblables aux circuits correspondants décrits en référence à la figure 11.

10. Circuit de sélection de l'interrupteur K ou K' selon l'alternance de Vab.

11. Oscillateur dont la période définit la durée d'une alternance de Vab.

12. Diviseur de fréquence par deux qui assure au signal Vab des alternances de durées égales.

13. Circuit de surveillance du bon fonctionnement de la lampe ou de son extinction. Si la tension Vb atteint 150 volts à la fin d'une alternance de Vab, une séquence d'amorçage est élaborée comme décrit en référence à la figure 16.

14. Circuit générateur d'une tension de référence.

15. Circuit qui modifie le facteur d'échelle k suivant la tension de sortie. On voit en référence à la figure 11 que l'asservissement de la somme k.Vout + k'.Iout permet d'asservir le convertisseur en puissance avec une bonne précision autour d'une valeur de Vout. Ici k prend une valeur si Vab est inférieure à 85 Volts et une autre valeur si Vab est supérieure à 85 Volts. Ainsi la même précision sur la puissance est obtenue pour une plage deux fois plus étendue de la tension Vab.

16. Circuit qui adapte la tension de consigne au régime de fonctionnement de la lampe. Cette fonction a pour but d'obtenir un éclairement constant dès que la lampe s'amorce, bien que son efficacité lumineuse varie beaucoup pendant la première minute de fonctionnement.

Le convertisseur DC/AC pour lampe à décharge illustré à la figure 15 qui vient d'être présenté peut être simplifié si on accumule l'énergie dans un seul transformateur avec une seule structure "Fly-Back" et si on la restitue alternativement sur deux enroulements secondaires, couplés avec l'enroulement primaire de façon originale, grâce à une structure originale à deux interrupteurs et deux diodes de redressement.

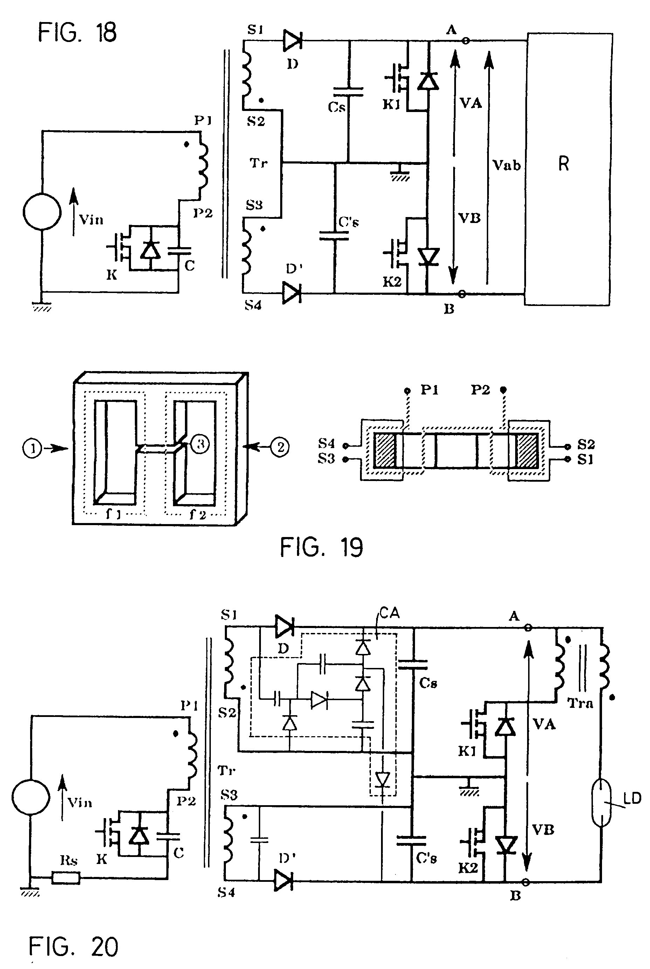

La figure 18 illustre cette structure originale qui fonctionne en régime permanent selon les séquences repérées à la figure 12.

- Phase 1 : l'interrupteur K commute à fréquence élevée. K1 est ouvert et K2 est fermé. Le transfert d'énergie de la source Vin vers le récepteur et son condensateur de filtrage Cs s'effectue par l'enroulement (S1,S2) selon le principe décrit en référence aux figures 2,3,4,5. La tension Vab est positive.
- Phase 2 : K et K1 sont ouverts, K2 est fermé. Le condensateur Cs se décharge dans le récepteur R. La tension Vab décroît.
- Phase 3 : K2 est passant et Cs est déchargé. La diode D et la diode interne de l'interrupteur K1 sont conductrices. La tension Vab est nulle.
On peut aussi passer directement de la phase 2 à la phase 4 afin de rétablir plus rapidement le courant en sens inverse dans la lampe constituant le récepteur R.
- Phase 4 : l'interrupteur K commute à fréquence élevée. K2 est ouvert et K1 est fermé. Le transfert d'énergie de la source Vin vers le récepteur et son condensateur de filtrage C's s'effectue par l'enroulement (S3,S4) selon le principe décrit en référence aux figures 2,3,4,5. La tension Vab est négative.
- Phase 5 : K et K2 sont ouverts, K1 est fermé. Le condensateur C's se décharge, etc...

Le circuit magnétique du transformateur, représenté à la figure 19, est formé de deux profils en "E" accolés avec un entrefer 3 placé dans la jambe centrale. Pour que le convertisseur de la figure 18 fonctionne selon les séquences énoncées, il faut que les bobinages soient organisés selon une technique originale représentée à la figure 19 afin de réduire et symétriser l'inductance de fuite entre (P1,P2) et (S1,S2) d'une part et entre (P1,P2) et (S3,S4) d'autre part.

L'enroulement primaire (P1,P2) est constitué par deux bobines identiques enroulées chacune autour d'une des jambes latérales 1 et 2 et mises en série de façon à ce que le courant commun qui les traverse engendre des flux additifs dans la jambe centrale et l'entrefer. Chacun des deux secondaires (S1,S2) et (S3,S4) est enroulé autour d'une jambe latérale de telle sorte que :

- si l'on considère le contour f1 qui passe par la jambe centrale 3 et la jambe latérale 1, le courant entrant par la borne P1 et le courant entrant par la borne S2 créent des ampère-tours additifs.
- de même, si on considère le contour f2 qui passe par la jambe centrale 3 et la jambe latérale 2, le courant entrant par le borne P1 et le courant entrant par la borne S3 créent des ampère-tours additifs.

La quasi totalité de l'énergie est véhiculée vers la sortie par l'enroulement secondaire (S1,S2) quand K2 est fermé et par l'enroulement secondaire (S3,S4) quand K1 est fermé. En effet, au cours d'une période de fonctionnement de K :

- si K est fermé, il y a stockage d'énergie dans l'entrefer 3 (figure 19) de la jambe centrale,
- si K est ouvert, la force magnétomotrice de la source qui vient d'être constituée voit, en parallèle, deux circuits magnétiques identiques 1 et 2 (figure 19) portant des enroulements identiques (S1,S2) et (S3,S4) fermés par des impédances différentes. Lorsque K2 est fermé et K1 est ouvert, (S3,S4) débite sur un court-circuit (énergie consommée très faible) et (S1,S2) restitue la plupart de l'énergie stockée dans l' entrefer au récepteur via le condensateur de découplage CS. Inversément, lorsque K1 est fermé et K2 est ouvert, (S1,S2) débite sur un courtcircuit et (S3,S4) restitue la plupart de l'énergie stockée dans l'entrefer au récepteur via le condensateur de découplage C'S.

Dans le cas de l'alimentation d'une lampe à décharge, il faut compléter la structure de la figure 18 par un dispositif ou circuit annexe Ca survolteur déjà évoqué à la figure 7 (ou 10 ou 10bis) en sortie et par un circuit d'amorçage. La figure 20 illustre le principe d'une telle association.

La séquence d'amorçage est conforme à celle évoquée en référence à la figure 16. Lorsque les interrupteurs K1 et K2 sont ouverts, le montage survolteur fonctionne sur le principe exprimé en référence à la figure 7. Le condensateur placé entre S3 et S4 présente une impédance faible devant celle du survolteur vue par l'enroulement entre S1 et S2. Alors, la tension entre S3 et S4 est très faible devant la tension disponible entre S1 et S2 pour alimenter le survolteur qui stocke dans CS sous environ 400V l'énergie nécessaire pour produire l'impulsion d'amorçage.

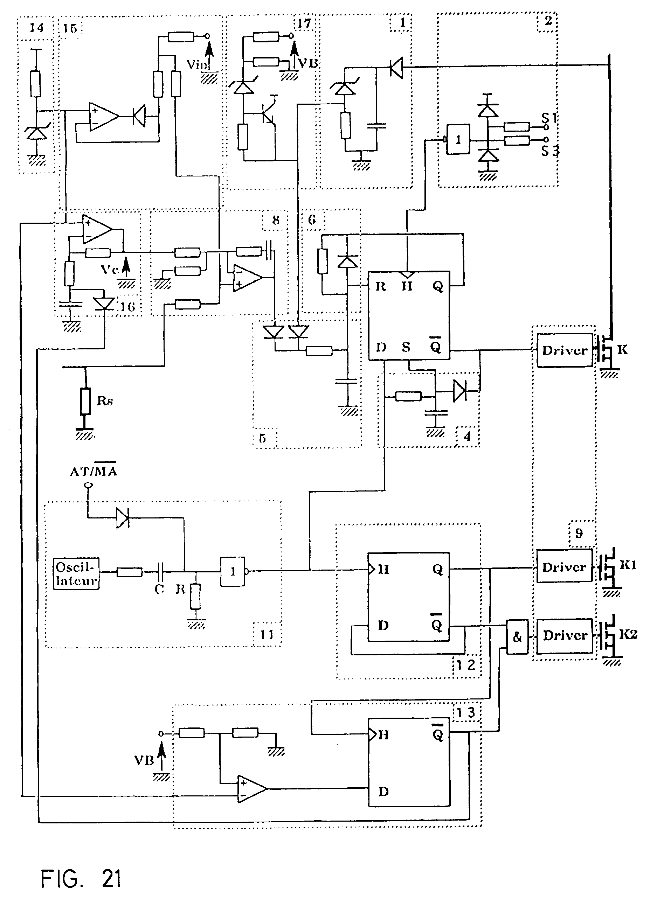

La figure 21 constitue un exemple de réalisation du circuit de commande du convertisseur pour lampe à décharge de la figure 20.

La structure au primaire du convertisseur est identique à celle décrite en référence à la figure 7. Son circuit de commande reprend, avec quelques variantes dans la réalisation, les fonctions repérées avec les numéros 1,2,4,5,6,8 et 9, décrites en référence aux figures 11 et 17. Au niveau du circuit 8 (boucle d'asservissement), c'est la puissance appelée à l'entrée qui est asservie car le convertisseur selon l'invention produit des pertes d'énergie qui varient très peu vis à vis des tensions d'entrée et de sortie. On utilise pour cette boucle l'image de la tension d'entrée Vin et celle du courant d'entrée captée par le shunt Rs placé maintenant au primaire de la structure.

La structure au secondaire du convertisseur est identique à celle décrite en référence à la figure 15. On retrouve donc dans le circuit de commande de la figure 21, avec quelques variantes dans la réalisation, les fonctions repérées avec les numéros 11,12,13,14,15 et 16.

Le circuit repéré par le numéro 17 a été ajouté. Il permet de réguler la tension Vb quand le circuit survolteur est validé.

Dans le circuit repéré par le numéro 15, le facteur d'échelle est modifié selon que la tension Vin est supérieure ou inférieure à une valeur choisie au milieu de la plage de variation de Vin. Ainsi, la précision sur la régulation de puissance est bonne sur toute la plage de variation de la tension Vin.

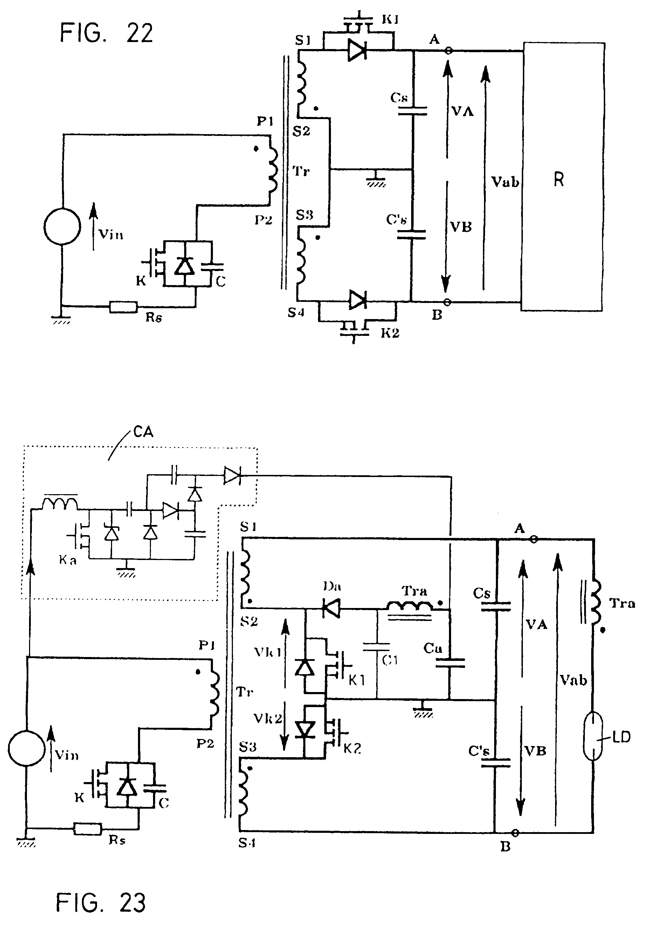

Ainsi, le convertisseur illustré à la figure 20 remplit des fonctions identiques à celui de la figure 15, avec une structure plus simple. Comme le courant au secondaire circule nécessairement à travers une diode (D ou D') et un interrupteur (K2 ou K1), la diode interne des interrupteurs peut être utilisée pour remplacer les diodes D et D'. On arrive alors à la structure de principe de la figure 22 qui constitue une structure originale de convertisseur DC/AC à trois interrupteurs statiques de type transistor MOS ou IGBT dont on utilise les diodes internes.

Pour faciliter le pilotage des interrupteurs en les référençant à la même masse (qui est aussi la masse du primaire), on peut intervertir la position relative des bobinages secondaires et des interrupteurs K1 et K2.

Pour alimenter une lampe à décharge LD, il faut compléter la structure illustrée à la figure 22 par un circuit d'amorçage formé du condensateur Ca, de la diode Da et du primaire du transformateur élévateur Tra comme le montre le schéma de convertisseur illustré à la figure 23. Le condensateur Ca ne peut plus être chargé directement à environ 400 V par un circuit survolteur activé par le convertisseur principal comme dans la structure de la figure 20. On a donc recours à un dispositif indépendant du convertisseur principal pour charger Ca. A la figure 23, le circuit annexe Ca est un circuit de charge réalisé avec le circuit survolteur décrit à la figure 7. Toute structure capable de précharger le condensateur Ca autour de 400 V convient également.

Le condensateur C1 placé entre Da et le primaire du transformateur Tra d'une part et la masse d'autre part, sert de circuit d'aide à la commutation pour l'interrupteur K1 quand il produit l'impulsion d'amorçage.

Le fonctionnement du convertisseur illustré à la figure 23 se fait selon les étapes suivantes :

- Phase d'amorçage de la lampe :
  Les interrupteurs K,K1 et K2 sont ouverts. Le circuit de charge annexe Ca est activé. Il charge les condensateurs Ca et Cs à environ 400 V.
  On ferme K1 pendant environ une microseconde. Le condensateur Ca se décharge à travers le primaire du transformateur Tra qui produit la haute tension. Cs se décharge très peu en raison de l'impédance du secondaire (S1,S2) du transformateur principal.
- Régime permanent :
  L'impulsion d'amorçage étant produite, on ouvre K1, on ferme K2, on valide le fonctionnement de l'interrupteur du primaire K et on arrête le circuit de charge annexe Ca. La diode inverse de l'interrupteur K1 sert de redresseur pour le convertisseur "Fly-Back" travaillant avec le transformateur dont le primaire est (P1,P2) et le secondaire est (S1,S2). L'enroulement (S3,S4) est mis en court-circuit bidirectionnel par K2 sur l'impédance du condensateur de filtrage C'S. La capacité de C'S est telle que la tension instantanée à ses bornes varie peu et alternativement au cours d'une période de fonctionnement de K. Sa valeur moyenne est donc nulle. La tension de sortie Vab est positive.

L'alternance négative de Vab est obtenue de façon symétrique en fermant K1 et ouvrant K2 alors que K commute à fréquence élevée. Le régime permanent est atteint.

Le transistor MOS est bien adapté pour réaliser les interrupteurs K, K1 et K2. Cependant, le fonctionnement en redresseur des diodes internes de la plupart des transistors MOS actuellement sur le marché s'accompagne d'un temps de recouvrement non négligeable qui est préjudiciable au rendement. Pour réduire considérablement le temps de recouvrement de la diode interne du transistor MOS il suffit de fermer celui-ci chaque fois que sa diode inverse tend à conduire naturellement en redresseur (technique dite du "redressement synchrone"). Par exemple, pendant l'alternance positive de Vab, K2 est fermé et K1, qui est normalement ouvert, sera fermé dès que sa diode inverse entre naturellement en conduction.

Dans l'état actuel de la technologie des transistors MOS, cette fonction apporte du rendement et (ou) la possibilité de travailler à fréquence plus élevée.

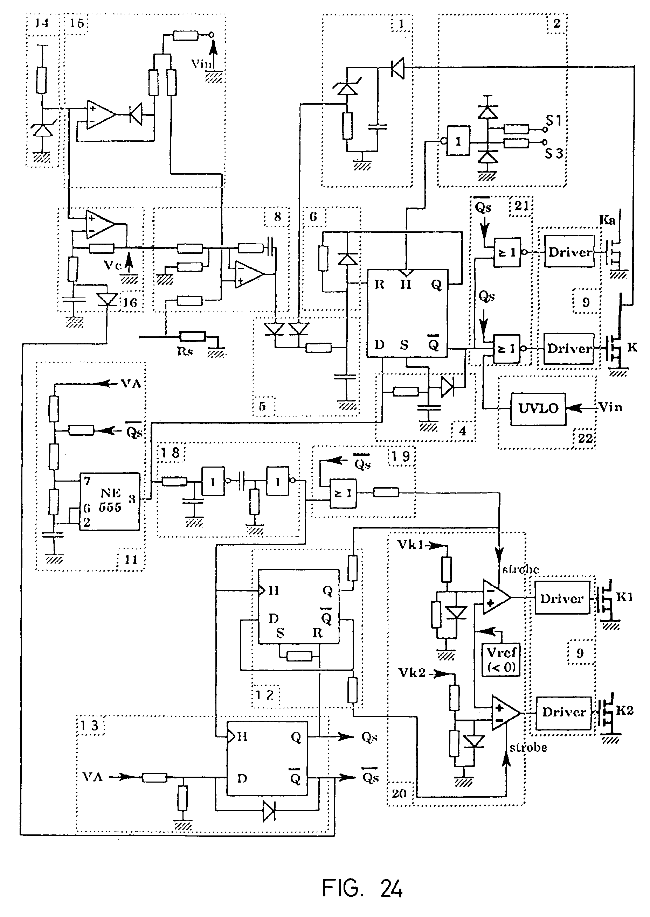

La figure 24 constitue un exemple de réalisation du circuit de commande du convertisseur pour lampe à décharge de la figure 23.

La structure au primaire du convertisseur est identique à celle décrite en référence à la figure 7. Son circuit de commande reprend les fonctions repérées avec les numéros 1,2,4,5,6,8 et 9, décrites en référence à la figure 21 et semblables à celles des figures 11 et 17.

La structure au secondaire du convertisseur fonctionne comme celle décrite en référence à la figure 20. On retrouve donc dans le circuit de commande de la figure 24, avec quelques variantes dans la réalisation, les fonctions repérées par les numéros 11,12,13,14,15 et 16 à la figure 20.

Pour tenir compte du fonctionnement de l'interrupteur Ka du circuit annexe de charge Ca, l'oscillateur du circuit 11 a été modifié. En régime permanent, il impose à l'interrupteur K un temps d'ouverture pendant le passage d'une alternance à l'autre, pour éviter de générer une surintensité au primaire dans le cas où le condensateur CS (ou C'S) n'est pas totalement déchargé. Au démarrage, il autorise le fonctionnement du circuit de charge annexe tant que la tension aux bornes du condensateur Ca (et CS) n'est pas suffisante pour obtenir les conditions d'amorçage (environ 400 V).

D'autres fonctions représentées à la figure 24 sont nécessaires au fonctionnement du convertisseur de la figure 23 :

18. Ce circuit commande le changement d'alternance lorsque l'interrupteur K est inhibé.

19. Ce circuit autorise l'impulsion d'amorçage sur l'interrupteur K1.

20. Ce circuit détecte le fonctionnement naturel de la diode inverse de K1 ou K2 et commande la fermeture de l'interrupteur correspondant. Cette fonction, qui a pour but de réduire le temps de recouvrement inverse des diodes internes des transistors MOS (ou IGBT), pourra être supprimée lorsque cette caractéristique sera réduite par les fabricants de semi-conducteurs.

21. Ce circuit aiguille les ordres de commande sur l'interrupteur Ka (en phase de précharge pour préparer l'amorceur) puis sur l'interrupteur K (en fonctionnement normal).

22. Ce circuit gère le niveau des alimentations (non représentées) des circuits électroniques. Il y a arrêt du convertisseur si la tension d'entrée Vin est insuffisante.

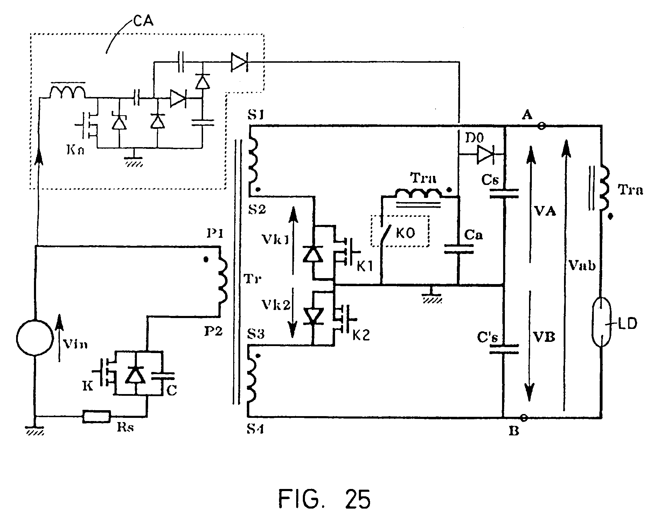

Enfin, au moment de l'impulsion d'amorçage, l'interrupteur K1 est traversé par un courant intense. Il peut être économiquement plus intéressant d'utiliser un interrupteur spécifique KO (de type MOS ou IGBT ou thyristor) pour l' amorceur et de libérer l'interrupteur K1 de cette fonction (convertisseurs des figures 20 et 23). Ceci entraîne quelques modifications au niveau des circuits de commande des figures 21 et 24 qui ne remettent pas en cause les innovations proposées pour ce type de convertisseur. La figure 25 illustre un exemple d'utilisation d'un interrupteur spécifique pour l'amorceur.

## Revendications

1. Ensemble d'alimentation en courant comportant un convertisseur statique à résonance du type Z.V.S. (Zero Voltage Switching), comportant au moins un interrupteur commandé (K) dans le circuit primaire d'un transformateur (Tr) dont le circuit secondaire comporte au moins un enroulement secondaire connecté en série avec une diode (D) et un condensateur de sortie (Cs), caractérisé en ce qu'un montage en série d'une première diode auxiliaire ($D_1$) avec un premier condensateur auxiliaire ($C_1$) est branché en parallèle avec ledit enroulement secondaire, au moins une deuxième ($D_2$), une troisième ($D_3$) et une quatrième ($D_4$) diode auxiliaire étant connectées en série entre le point de connexion commun de ladite première diode auxiliaire ($D_1$) avec ledit premier condensateur auxiliaire ($C_1$) et le point de connexion commun de ladite diode (D) avec ledit condensateur de sortie (Cs), et un deuxième ($C_2$) et un troisième ($C_3$) condensateur auxiliaire étant connectés, respectivement, en parallèle avec le montage en série desdites première ($D_1$) et deuxième ($D_2$) diodes auxiliaires et en parallèle avec le montage en série desdites deuxième ($D_2$) et troisième ($D_3$) diodes auxiliaires.

2. Ensemble d'alimentation en courant comportant un convertisseur statique à résonance du type Z.V.S. (Zero Voltage Switching), comportant au moins un interrupteur commandé (K) dans le circuit primaire d'un transformateur (Tr) dont le circuit secondaire comporte au moins un enroulement secondaire connecté en série avec une diode (D) et un premier condensateur de sortie (Cs), caractérisé en ce qu'un deuxième condensateur de sortie ($C_5$) est

connecté en série avec le premier (Cs) et avec le montage en série d'un premier condensateur auxiliaire ($C_4$) et d'une première diode auxiliaire ($D_6$), le montage en série dudit deuxième condensateur de sortie ($C_5$) avec ladite première diode auxiliaire ($D_6$) et ledit premier condensateur auxiliaire ($C_4$) étant branché en parallèle avec ladite diode (D), une deuxième diode auxiliaire ($D_5$) étant connectée entre le point de connexion commun de ladite diode (D) avec le premier condensateur de sortie (Cs) et le point de connexion commun dudit premier condensateur auxiliaire ($C_4$) avec ladite première diode auxiliaire ($D_6$), lesdites première et deuxième diodes auxiliaires ayant leurs chemins de conduction dans le même sens que ladite diode (D).

3. Ensemble selon la revendication 2, caractérisé en ce qu'une troisième diode auxiliaire ($D_7$) est montée en parallèle avec la connexion en série desdites première ($D_6$) et deuxième ($D_5$) diodes auxiliaires, les chemins de conduction de ces diodes dans ledit montage en parallèle étant orientés dans le même sens.

4. Ensemble selon la revendication 2, caractérisé en ce qu'un troisième condensateur de sortie ($C_7$) est connecté en série avec lesdits premier (Cs) et deuxième ($C_5$) condensateurs de sortie et avec le montage en série d'un deuxième condensateur auxiliaire ($C_6$) et d'une quatrième diode auxiliaire ($D_8$), le montage en série dudit troisième condensateur de sortie ($C_7$) avec ledit deuxième condensateur auxiliaire ($C_6$) et ladite quatrième diode auxiliaire ($D_8$) étant branché en parallèle avec ladite première diode auxiliaire ($D_6$), une cinquième diode auxiliaire ($D_9$) étant montée entre le point de connexion commun de ladite première diode auxiliaire ($D_6$) avec le deuxième condensateur de sortie ($C_5$) et le point de connexion commun dudit deuxième condensateur auxiliaire ($C_6$) avec ladite quatrième diode auxiliaire ($D_8$), lesdites quatrième et cinquième diodes auxiliaires ayant leurs chemins de conduction dans le même sens que ladite première diode auxiliaire ($D_6$), et une sixième diode auxiliaire ($D_7$) étant montée en parallèle avec lesdites deuxième ($D_5$), première ($D_6$), cinquième ($D_9$) et quatrième ($D_8$) diodes auxiliaires, les chemins de conduction desdites deuxième, première, cinquième et quatrième diodes auxiliaires, d'une part, et de la sixième diode auxiliaire, d'autre part, dans ledit montage en parallèle étant orientés dans le même sens.

5. Ensemble d'alimentation en courant comportant un convertisseur statique à résonance du type Z.V.S (Zero Voltage Switching), comportant au moins un interrupteur commandé (K) dans le circuit primaire d'un transformateur (Tr), dont le circuit secondaire comporte au moins un enroulement secondaire connecté en série avec une diode (D) et un condensateur de sortie (Cs), caractérisé en ce que les enroulements dudit transformateur sont disposés sur un noyau magnétique comportant au moins trois jambes, à savoir deux jambes latérales (1, 2) et une jambe médiane (3), cette jambe médiane présentant un entrefer, l'enroulement primaire ($P_1$, $P_2$) étant constitué par deux bobines identiques montées, respectivement, sur une jambe latérale correspondante du circuit et connectées en série de façon que le courant commun qui les traverse, engendre des flux additifs dans la jambe médiane, ledit transformateur comportant deux enroulements secondaires ($S_1$, $S_2$; $S_3$, $S_4$) disposés, respectivement, sur lesdites jambes latérales, de telle manière qu'un courant passant dans un sens donné dans l'enroulement primaire engendre dans lesdits enroulements secondaires des ampères-tours qui créent des flux additifs dans la jambe médiane.

6. Ensemble selon la revendication 5, caractérisé en ce que lesdits enroulements secondaires sont, chacun, fermés par une diode (D, D') et un condensateur de sortie (Cs, C's), ces condensateurs de sortie étant shuntés, chacun, au moins par un interrupteur commandé respectif ($K_1$, $K_2$), des premières bornes de chaque condensateur de sortie étant connectées entre elles et les secondes bornes respectives (A, B) formant les bornes de sortie pour la connexion d'un circuit de charge.

7. Ensemble selon la revendication 6, caractérisé en ce qu'il comporte un transformateur d'amorçage (Tra), dont un enroulement primaire est connecté en série avec l'un ($K_1$) desdits interrupteurs commandés, un enroulement secondaire dudit transformateur d'amorçage étant connecté en série avec une charge (LD).

8. Ensemble selon la revendication 5, caractérisé en ce qu'au moins l'un desdits enroulements secondaires est fermé par une diode et un condensateur de sortie (Cs), ladite diode étant shuntée par un interrupteur commandé ($K_1$), ledit ensemble comprenant en outre un circuit d'amorçage avec un transformateur d'amorçage (Tra) dont un enroulement primaire est monté en série avec un condensateur d'amorçage ($C_a$) et une diode d'amorçage ($D_a$), ce montage en série étant connecté en parallèle avec ledit interrupteur commandé ($K_1$), un enroulement secondaire dudit transformateur d'amorçage étant connecté en série avec une charge (LD).

9. Ensemble selon l'une des revendications 7 ou 8, caractérisé en ce qu'il comporte un circuit élévateur de tension (CA) connecté à au moins l'un desdits enroulements secondaires ($S_1$, $S_2$) et audit condensateur d'amorçage ($C_a$).

10. Ensemble selon la revendication 5, caractérisé en ce que lesdits enroulements secondaires sont, chacun, fermés par une diode et un condensateur de sortie (Cs, C's), lesdites diodes étant shuntées, chacune, par un interrupteur commandé respectif ($K_1$, $K_2$), des premières bornes de chaque condensateur de sortie étant connectées entre elles et les secondes bornes respectives (A, B) formant les bornes de sortie pour la connexion d'un circuit de charge (R).

11. Ensemble selon la revendication 10 pour l'alimentation d'une lampe à décharge, caractérisé en ce qu'il comporte un circuit d'amorçage avec un transformateur d'amorçage (Tra) dont un enroulement primaire est monté en série avec un condensateur d'amorçage ($C_a$) et une diode d'amorçage ($D_a$), ce montage en série étant connecté en parallèle avec l'un ($K_1$) desdits interrupteurs commandés, un enroulement secondaire dudit transformateur d'amorçage étant connecté en série avec ladite lampe dans le circuit de charge et un circuit élévateur de tension auxiliaire (CA) étant connecté audit condensateur d'amorçage ($C_a$).

12. Ensemble selon la revendication 5, caractérisé en ce que lesdits enroulements secondaires sont, chacun, fermés par une diode et un condensateur de sortie (Cs, C's), au moins l'une desdites diodes étant shuntée par un interrupteur commandé ($K_1$), ledit ensemble comportant un circuit d'amorçage avec un transformateur d'amorçage (Tra) dont un enroulement primaire est monté en série avec un interrupteur commandé d'amorçage ($K_0$), ce montage en série étant connecté en parallèle avec un condensateur d'amorçage ($C_a$), un enroulement secondaire de ce transformateur d'amorçage étant connecté en série avec une charge, l'ensemble comportant en outre un circuit élévateur de tension auxiliaire (CA) connecté audit condensateur d'amorçage ($C_a$).

13. Ensemble selon l'une des revendications 6 à 12, pour une charge constituée par une lampe à décharge, caractérisé en ce qu'il comporte un circuit de commande de convertisseur comprenant des amplificateurs de courant (9) pour actionner lesdits interrupteurs commandés, un oscillateur (11) dont la période détermine la durée de chaque alternance de la tension de sortie sur lesdits condensateurs de sortie, un circuit diviseur de fréquences par deux (12), assurant que les durées desdites alternances de la tension de sortie soient égales, un circuit de contrôle (13) de l'état d'allumage ou d'extinction de la lampe, un circuit générateur de tension de référence (14), un circuit élaborant un facteur d'échelle (15) et un circuit de commande de la tension de référence (16).

14. Ensemble selon l'une des revendications 6 à 13, caractérisé en ce qu'il comporte un circuit de commande de convertisseur comprenant un circuit de commande (18) de changement d'alternance pendant la phase d'inhibition dudit interrupteur commandé connecté auxdits enroulements primaires, un circuit (19) autorisant l'amorçage de l'un desdits interrupteurs commandés connectés auxdits enroulements secondaires et un circuit (20) de détection de l'état de conduction desdites diodes associées auxdits interrupteurs commandés et pour la commande de ceux-ci.

15. Ensemble d'alimentation en courant comportant un convertisseur statique à résonance du type Z.V.S (Zero Voltage Switching), comportant au moins un interrupteur commandé (K) dans le circuit primaire d'un transformateur (Tra) dont le circuit secondaire comporte au moins un enroulement secondaire connecté en série avec une diode (D) et un condensateur de sortie (Cs), caractérisé en ce qu'il comporte un circuit de commande du convertisseur, comprenant des moyens pour commander le fonctionnement dudit interrupteur commandé en fonction soit de la somme d'une tension qui est l'image du courant de sortie de l'ensemble et d'une tension qui est l'image de la tension de sortie de l'ensemble, soit de la somme d'une tension qui est l'image du courant d'entrée et d'une tension qui est l'image de la tension d'entrée du convertisseur.

16. Ensemble selon la revendication 15, caractérisé en ce que lesdites tensions images sont déterminées par rapport auxdits courants ou tensions d'entrée et de sortie par des facteurs d'échelle prédéterminés correspondants.

**Claims**

1. A power supply assembly including a resonant static converter of the Z.V.S. (Zero Voltage Switching) type, comprising at least one controlled switch (K) in a primary circuit, a transformer (Tr) whose secondary circuit includes at least one secondary winding connected in series with a diode (D) and an output capacitor (Cs), characterized in that a first auxiliary diode ($D_1$) and a first auxiliary capacitor ($C_1$) mounted in series is connected in parallel with said secondary winding, at least one second ($D_2$), one third ($D_3$) and one fourth ($D_4$) auxiliary diodes connected in series between the common connection point of said first auxiliary diode ($D_1$) and said first auxiliary capacitor ($C_1$), and the common con-

nection point of said diode (D) and said output capacitor (Cs), and a second ($C_2$) and a third ($C_3$) auxiliary capacitors being connected, respectively, in parallel with the series connection of said first ($D_1$) and second ($D_2$) auxiliary diodes and in parallel with the series connection of said second ($D_2$) and third ($D_3$) auxiliary diodes.

2. A power supply assembly including a resonant static converter of the Z.V.S. (Zero Voltage Switching) type, comprising at least one controlled switch (K) in a primary circuit, a transformer (Tr) whose secondary circuit includes at least one secondary winding connected in series with a diode (D) and an output capacitor (Cs), characterized in that a second output capacitor (Cs) is connected in series with said first output capacitor (Cs), and with a first auxiliary capacitor ($C_4$) and a first auxiliary diode ($D_6$) mounted in series, the series connection of said second output capacitor (Cs) with said first auxiliary diode ($D_6$) and said first auxiliary capacitor ($C_4$) being mounted in parallel with said diode (D), a second auxiliary diode ($D_5$) being connected between the common connection point of said diode (D) and said first output capacitor (Cs) and the common connection point of said first auxiliary capacitor ($C_4$) and said first auxiliary diode ($D_6$), said first and second auxiliary diodes having their conduction pats directed in the same direction as said diode (D).

3. An assembly as claimed in claim 33, characterized in tat a third auxiliary diode ($D_7$) is connected in parallel with said first ($D_6$) and second ($D_5$) auxiliary diodes series connection, the conduction paths of these diodes in said parallel connection being directed in the same direction.

4. An assembly as claimed in claim 2, characterized in that a third output capacitor ($C_7$) is connected in series with said first (Cs) and second ($C_5$) output capacitors with a second auxiliary capacitor and a fourth auxiliary diode connected in series, the series connection of said third output capacitor ($C_7$) with said second auxiliary capacitor ($C_6$) and said fourth auxiliary diode ($D_8$) being mounted in parallel with said first auxiliary diode ($D_6$), a fifth auxiliary diode ($D_9$) being connected between the common connection point of said first auxiliary diode ($D_6$) and said second output capacitor ($C_5$) and a common connection point of said second auxiliary capacitor ($C_6$) and said fourth auxiliary diode ($D_8$), said fourth and fifth auxiliary diodes having their conduction paths directed in the same direction as said first auxiliary diode ($D_6$), and a sixth auxiliary diode being connected in parallel with said second ($D_5$), first ($D_6$), fifth ($D_9$) and fourth ($D_8$) auxiliary diodes, the conduction paths of said second, first, fifth and fourth auxiliary diodes, on the one hand, and of said sixth auxiliary diode, on the other hand, in said parallel connection being directed in the same direction.

5. A power supply assembly including a resonant static converter of the Z.V.S. (Zero Voltage Switching) type, comprising at least one controlled switch (K) in a primary circuit, a transformer (Tr) whose secondary circuit includes at least one secondary winding connected in series with a diode (D) and an output capacitor (Cs), characterized in that said transformer windings are arranged on a magnetic core having at least three legs, namely two lateral legs (1, 2) and one middle leg (3), an air-gap being provided in said middle leg, the primary winding ($P_1$, $P_2$) comprising two identic coils arranged, respectively, on a corresponding lateral leg of the circuit and connected in series in such a way that the common current flowing in said coils produces additive magnetic fluxes in the middle leg, said transformer comprising two secondary coils ($S_1$, $S_2$; $S_3$, $S_4$), each arranged on a respective one of said lateral legs in such a way that a current of a given direction flowing in said primary winding produces in said secondary coils ampere-turns creating additive fluxes in said middle leg.

6. An assembly according to claim 5, characterized in that said secondary coils are each connected in series in a closed circuit with a diode (D, D') and an output capacitor (Cs, C's), said output capacitors being each by-passed by a respective controlled switch ($K_1$, $K_2$), first terminals of each of said output capacitors being connected together and the respective second terminals forming the output connections for the connection of a load circuit

7. An assembly according to claim 6, characterized in that it comprises a starting transformer (Tra), a primary winding thereof being connected in series with one ($K_1$) of said controlled switches, a secondary coil of said starting transformer being connected in series with a load (LD).

8. An assembly according to claim 5, characterized in that at least one of said secondary coils is closed with a diode and an output capacitor (Cs), said diode being by-passed by a controlled switch ($K_1$), said assembly further comprising a starting circuit wit a starting transformer (Tra) whose primary winding is mounted in series with a starting capacitor ($C_a$) and a starting diode ($D_a$), said series mounting being connected in parallel with said controlled switch ($K_1$), a secondary winding of said starting transformer being connected in series with a lead (LD).

**9.** An assembly according to one of claims 7 or 8, characterized in that it comprises a voltage booster rectifier circuit (CA) connected to at least one of said secondary coils ($S_1$, $S_2$) and to said starting capacitor ($C_a$).

**10.** An assembly according to claim 5, characterized in that said secondary coils are each closed with a diode and an output capacitor (Cs, C's), said diodes being bypassed by a respective controlled switch ($K_1$, $K_2$), first terminals of each of said output capacitors being connected together and the second terminals (A, B) respectively forming the output connections of a load circuit (R).

**11.** An assembly according to claim 10 for power supply of a discharge lamp, characterized in that it comprises a starting circuit with a starting transformer (Tra), whose primary winding is mounted in series with a starting capacitor ($C_a$)and a starting diode ($D_a$) said series mounting being connected in parallel with one ($K_1$) of said controlled switches, a secondary winding of said starting transformer being series-connected with said lamp in the load circuit and an auxiliary voltage booster circuit (CA) being connected to said starting capacitor ($C_a$).

**12.** An assembly according to claim 5, characterized in that said secondary coils are each closed circuit with a diode and an output capacitor (Cs, C's), at least one of said diodes being by-passed by a controlled switch ($K_1$), said assembly including a starting circuit with a starting transformer (Tra) whose primary winding is mounted in series with a controlled starting switch ($K_0$), this series mounting being connected in parallel with a starting capacitor ($C_a$), a secondary winding of said starting transformer being series connected with a load, the assembly further comprising an auxiliary voltage booster circuit (CA) being connected to said starting capacitor ($C_a$).

**13.** An assembly according to one of claims 6 to 12, whereby said load is a discharge lamp, characterized in that it includes a converter control circuit comprising current amplifiers (9) for driving said controlled switches, an oscillator (11) the period of which determines the duration of each alternation of the output voltage across said output capacitors, a frequency by two divider circuit (12) for providing equal durations of said output voltage alternations, a lamp on/off monitoring circuit (13), a reference voltage generating circuit (14), a scale factor generating circuit (15) and a reference voltage control circuit (16).

**14.** An assembly according to one of claims 6 to 13, characterized in that it includes a converter control circuit, comprising a control circuit (18) for changing the output voltage alternation during an inhibition phase of said controlled switch connected to said primary windings, a circuit (19) for enabling the turning on of one of said controlled switches connected to said secondary coils and a circuit (20) for detecting the state of conduction of said diodes associated with said controlled switches and for controlling the same.

**15.** A power supply assembly including a resonant static converter of the Z.V.S. (Zero Voltage Switching) type comprising at least one controlled switch (K) in the primary circuit of a transformer (Tra) whose secondary circuit comprises at least one secondary winding connected in series with a diode (D) and an output capacitor (Cs), characterized in that it comprises a converter control circuit comprising means for controlling the operation of said switch as a function either of the sum of a voltage being an image of the output current of the assembly and of a voltage being an image of the output voltage of the assembly, or of the sum of a voltage being an image of the input current and of a voltage being an image of the input voltage of the converter.

**16.** An assembly according to claim 15, characterized in that said image voltages are determined with respect to said input and output currents or voltages by corresponding predetermined scale factors.

**Patentansprüche**

**1.** Stromspeisungseinheit mit einem statischen Resonanzwandler vom Type Z.V.S. (Zero Voltage Switching), welcher mindestens einen gesteuerten Schalter (K) im Primärkreis eines Transformators (Tr) aufweist, dessen Sekundärkreis mindestens eine Sekundärwicklung aufweist, die in Serie mit einer Diode (D) und einem Ausgangskondensator (Cs) geschaltet ist, dadurch gekennzeichnet, dass eine Serienschaltung einer ersten Hilfsdiode ($D_1$) mit einem ersten Hilfskondensator ($C_1$) parallel zu der genannten Sekundärwicklung geschaltet ist, wobei mindestens eine zweite ($D_2$), eine dritte ($D_3$) und eine vierte ($D_4$) Hilfsdiode in Serie zwischen dem gemeinsamen Verbindungspunkt der genannten ersten Hilfsdiode ($D_1$) mit dem genannten ersten Hilfskondensator ($C_1$) und dem gemeinsamen Verbindungspunkt der genannten Diode (D) mit dem genannten Ausgangskondensator (Cs) geschaltet sind und wobei ein zweiter ($C_2$) und ein dritter ($C_3$) Hilfskondensator jeweils parallel mit der Serienschaltung der genannten ersten ($D_1$) und zweiten ($D_2$) Hilfsdioden und parallel zu der Serienschaltung der genannten zweiten ($D_2$) und dritten ($D_3$) Hilfsdioden geschaltet sind.

2. Stromspeisungseinheit mit einem statischen Resonanzwandler vom Typ Z.V.S. (Zero Voltage Switching), welcher mindestens einen gesteuerten Schalter (K) im Primärkreis eines Transformators (Tr) aufweist, dessen Sekundärkreis mindestens eine Sekundärwicklung aufweist, die in Serie mit einer Diode (D) und einem Ausgangskondensator (Cs) geschaltet ist, dadurch gekennzeichnet, dass ein zweiter Ausgangskondensator ($C_5$) in Serie mit dem ersten (Cs) und mit der Serienschaltung eines ersten Hilfskondensators ($C_4$) und einer ersten Hilfsdiode ($D_6$) geschaltet ist, wobei die Serienschaltung des genannten zweiten Ausgangskondensators ($C_5$) mit der genannten ersten Hilfsdiode ($D_6$) und dem genannten ersten Hilfskondensator ($C_4$) parallel mit der genannten Diode (D) geschaltet ist und wobei eine zweite Hilfsdiode ($D_5$) zwischen dem gemeinsamen Verbindungspunkt der genannte Diode (D) mit dem genannten ersten Ausgangskondensator (Cs) und dem gemeinsamen Verbindungspunkt des genannten ersten Hilfskondensators ($C_4$) mit der genannten ersten Hilfsdiode ($D_6$) geschaltet ist, wobei die Leitungspfade der genannten ersten und zweiten Hilfsdioden in der gleichen Richtung wie derjenige der genannten Diode (D) liegen.

3. Stromspeisungseinheit nach Patentanspruch 2, dadurch gekennzeichnet, dass eine dritte Hilfsdiode ($D_7$) parallel zur Serienschaltung der genannten ersten ($D_6$) und zweiten ($D_5$) Hilfsdioden geschaltet ist, wobei die Leitungspfade dieser Dioden in der genannten Paralleischaltung in der gleichen Richtung liegen.

4. Stromspeisungsebheit nach Patentanspruch 2, dadurch gekennzeichnet, dass ein dritter Ausgangskondensator ($C_7$) in Serie mit den genannten ersten (Cs) und zweiten ($C_5$) Ausgangskondensatoren und mit der Serienschaltung eines zweiten Hilfskondensators ($C_6$) und einer vierten Hilfsdiode ($D_8$) geschaltet ist, wobei die Serienschaltung des genannten dritten Ausgangskondensators ($C_7$) mit dem genannten zweiten Hilfskondensator ($C_6$) und der genannten vierten Hilfsdiode ($D_8$) parallel zu der genannten ersten Hilfsdiode ($D_6$) geschaltet ist, wobei eine fünfte Hilfsdiode ($D_9$) zwischen dem gemeinsamen Verbindungspunkt der genannten ersten Hilfsdiode ($D_6$) mit dem zweiten Ausgangskondensator ($C_5$) und dem gemeinsamen Verbindungspunkt des genannten zweiten Hilfskondensators ($C_6$) mit der genannten vierten Hilfsdiode ($D_8$) geschaltet ist, wobei die Leitungspfade der genannten vierten und fünften Hilfsdioden in der gleichen Richtung liegen wie derjenige der genannten ersten Hilfsdiode ($D_6$) und eine sechste Hilfsdiode ($D_7$) parallel zu den genannten zweiten ($D_5$), ersten ($D_6$), fünften ($D_9$) und vierten ($D_8$) Hilfsdioden geschaltet ist, wobei die Leitungspfade der genannten zweiten, ersten, fünften und vierten Hilfsdioden einerseits und jener der sechsten Hilfsdiode andererseits in der genannten Parallelschaltung in der gleichen Richtung liegen.

5. Stromspeisungseinheit mit einem statischen Resonanzwandler vom Type Z.V.S. (Zero Voltage Switching), welcher mindestens einen gesteuerten Schalter (K) im Primärkreis eines Transformators (Tr) aufweist, dessen Sekundärkreis mindestens eine Sekundärwicklung aufweist, die in Serie mit einer Diode (D) und einem Ausgangskondensator (Cs) geschaltet ist, dadurch gekennzeichnet, dass die Wicklungen des genannten Tranformators auf einem magnetischen Kern angeordnet sind, der mindestens drei Schenkel besitzt, nämlich zwei Seitenschenkel (1, 2) und einen Mittelschenkel (3), wobei dieser Mittelschenkel einen Luftspalt aufweist, die Primärwicklung ($P_1$, $P_2$) durch zwei identische Spulen gebildet wird, die jeweils auf einem entsprechenden Seitenschenkel des Kreises angeordnet sind und in Serie geschaltet sind, derart, dass der sie durchfliessende gemeinsame Strom im Mittelschenkel sich addierende Flüsse hervorruft, und wobei der genannte Transformator zwei Sekundärwicklungen ($S_1$, $S_2$; $S_3$, $S_4$) aufweist, die jeweils auf den genannten Seitenschenkeln angeordnet sind, derart, dass ein in der Primärwicklung in einer gegebenen Richtung fliessende Strom in den genannten Sekundärwicklungen Ampère-Windungszahlen erzeugt, die im Mittelschenkel sich addierende Flüsse hervorrufen.

6. Stromspeisungseinheit nach Patentanspruch 5, dadurch gekennzeichnet, dass die genannten Sekundärwicklungen jeweils über eine Diode (D, D') und einen Ausgangskondensator (Cs, C's) geschlossen sind, wobei diese Ausgangskondensatoren jeweils einen Nebenschluss mit mindestens einem entsprechenden gesteuerten Schalter ($K_1$, $K_2$) besitzen, wobei erste Klemmen jedes Ausgangskondensators untereinander verbunden sind und die entsprechenden zweiten Klemmen (A, B) Ausgangsklemmen zum Anschluss eines Lastkreises bilden.

7. Stromspeisungseinheit nach Patentanspruch 6, dadurch gekennzeichnet, dass sie einen Zündtransformator (Tra) aufweist, wobei eine Primärwicklung desselben in Serie mit einem ($K_1$) der genannten gesteuerten Schalter geschaltet ist und eine Sekundärwicklung des genannten Zündtransformators in Serie mit einer Last (LD) geschaltet ist.

8. Stromspeisungseinheit nach Patentanspruch 5, dadurch gekennzeichnet, dass mindestens eine der genannten Sekundärwicklungen über eine Diode und einen Ausgangskondensator $(C_s)$ geschlossen ist, wobei die genannte Diode einen Nebenschluss mit einem gesteuerten Schalter $(K_1)$ besitzt und die genannte Stromspeisungseinheit ferner einen Zündkreis mit einem Zündtransformator (Tra) aufweist, wobei eine Primärwicklung desselben in Serie mit einem Zündkondensator $(C_a)$ und einer Zünddiode $(D_a)$ geschaltet ist, diese Serienschaltung parallel zu dem genannten gesteuerten Schalter $(K_1)$ geschaltet ist und eine Sekundärwicklung des genannten Zündtransformators in Serie mit einer Last (LD) geschaltet ist.

9. Stromspeisungseinheit nach einem der Patentansprüche 7 oder 8, dadurch gekennzeichnet, dass sie einen Spannungserhöhungskreis (CA) aufweist, der zumindest an eine der genannten Sekundärwicklungen $(S_1, S_2)$ und an den genannten Zündkondensator $(C_a)$ angeschlossen ist.

10. Stromspeisungseinheit nach Patentanspruch 5, dadurch gekennzeichnet, dass die genannten Sekundärwicklungen jeweils über eine Diode und einen Ausgangskondensator (Cs, C's) geschlossen sind, wobei die genannten Dioden jeweils einen Nebenschluss mit einem entsprechenden gesteuerten Schalter $(K_1, K_2)$ besitzen, die ersten Klemmen jedes Ausgangskondensators miteinander verbunden sind und die zweiten entsprechenden Klemmen (A, B) Ausgangsklemmen zum Anschluss eines Lastkreises (R) bilden.

11. Stromspeisungseinheit nach Patentanspruch 10 zur Speisung einer Entladungslampe, dadurch gekennzeichnet, dass sie einen Zündkreis mit einem Transformator (Tra) aufweist, wobei eine Primärwicklung desselben in Serie mit einem Zündkondensator $(C_a)$ und einer Zünddiode $(D_a)$ geschaltet ist und wobei diese Serienschaltung parallel zu einem $(K_1)$ der genannten gesteuerten Schalter geschaltet ist und eine Sekundärwicklung des genannten Zündtransformators in Serie mit der genannten Lampe im Lastkreis geschaltet ist und ein Spannungserhöhungshilfskreis (CA) an den genannten Zündkondensator $(C_a)$ angeschlossen ist.

12. Stromspeisungseinheit nach Patentanspruch 5, dadurch gekennzeichnet, dass die genannten Sekundärwicklungen jeweils über eine Diode und einen Ausgangskondensator (Cs, C's) geschlossen sind, wobei mindestens eine der genannten Dioden einen Nebenschluss mit einem gesteuerten Schalter $(K_1)$ besitzt, die genannte Speisungseinheit einen Zündkreis mit einem Zündtransformator (Tra) aufweist, wobei eine Primärwicklung desselben in Serie mit einem gesteuerten Zündschalter $(K_0)$ geschaltet ist, diese Serienschaltung parallel zu

einem Zündkondensator $(C_A)$ geschaltet ist, eine Sekundärwicklung dieses Zündtransformators in Serie mit einer Last liegt und die Stromspeisungseinheit ferner einen Spannungserhöhungshilfskreis (CA) aufweist, der an den genannten Zündkondensator $(C_a)$ angeschlossen ist.

13. Stromspeisungseinheit nach einem der Patentansprüche 6 bis 12 für eine durch eine Entladungslampe gebildete Last, dadurch gekennzeichnet, dass sie einen Steuerkreis für den Wandler aufweist, welcher Stromverstärker (9) zur Betätigung der genannten gesteuerten Schalter enthält, sowie einen Oszillator (11), dessen Periode die Dauer jedes Wechsels der Ausgangsspannung an den genannten Ausgangskondensatoren bestimmt, einen Frequenzteilungskreis (12) zur Teilung durch zwei, der gewährleistet, dass die Dauer der genannten Wechsel der Ausgangsspannung gleich ist, einen Kontrollkreis (13) für den Zünd- oder Löschzustand der Lampe, einen Bezugsspannungsgenerator (14), einen Kreis (15) zur Erstellung eines Skalenfaktors und einen Steuerkreis für die Bezugsspannung (16).

14. Stromspeisungseinheit nach einem der Patentansprüche 6 bis 13, dadurch gekennzeichnet, dass sie einen Wandler-Steuerkreis aufweist, der einen Steuerkreis (18) zur Änderung des Wechsels der Ausgangsspannung während der Inhibitionsphase des genannten, an die genannten Primärwicklungen angeschlossenen gesteuerten Schalters enthält, einen Kreis (19), der die Auslösung eines der genannten gesteuerten Schalter, die an die genannten Sekundärwicklungen angeschlossen sind, gestattet, und einen Kreis (20) zur Erkennung des Leitungszustands der genannten Dioden, die dem genannten gesteuerten Schalter zugeordnet sind, und zur Steuerung dieser Dioden.

15. Stromspeisungseinheit mit einem statischen Resonanzwandler vom Typ Z.V.S. (Zero Voltage Switching), die mindestens einen gesteuerten Schalter (K) im Primärkreis eines Transformators (Tra) aufweist, dessen Sekundärkreis mindestens eine Sekundärwicklung besitzt, die in Serie mit einer Diode (D) und einem Ausgangskondensator (Cs) geschaltet ist, dadurch gekennzeichnet, dass sie einen Steuerkreis für den Wandler aufweist, der Mittel zur Steuerung des Arbeitens des genannten Schalters in Abhängigkeit entweder der Summe einer Spannung, die eine Abbildung des Ausgangsstromes der Stromspeisungseinheit ist, und einer Spannung, die eine Abbildung der Ausgangsspannung der Stromspeisungseinheit ist, oder in Abhängigkeit der Summe einer Spannung, die eine Abbildung des Eingangsstroms ist, und einer Spannung, die eine Abbildung der Eingangsspannung des Wandlers ist, besitzt.

16. Stromspeisungseinheit nach Patentanspruch 15, dadurch gekennzeichnet, dass die genannten Abbildungsspannungen im Verhältnis zu den genannten Eingangs- und Ausgangs-Strömen bzw. -Spannungen durch entsprechende vorbestimmte Skalenfaktoren bestimmt sind.

FIG. 1

FIG. 2

FIG. 3

FIG. 4

FIG. 5

FIG. 6

FIG. 7

FIG. 8

Vout

2.m.Vkcrête —

Zone 2

Voutm —

Zone 1

Iout

FIG. 9

FIG. 10

FIG. 10 bis

FIG. 11

## FIG. 12

## FIG. 13

FIG. 14

FIG. 16

FIG. 15

FIG. 17

FIG. 18

FIG. 19

FIG. 20

FIG. 21

FIG. 22

FIG. 23

FIG. 24

FIG. 25